# EUROPEAN PATENT APPLICATION

(11) **EP 2 138 823 A1**
(43) Date of publication of application: **30.12.2009**
(21) Application number: 08739183.5
(22) Date of filing: 28.03.2008
(51) Int. Cl.: G01N 1/06, G01N 1/28, G02B 21/00

(54) **DEVICE FOR STORING SPECIMEN SLICE AND INSTRUMENT FOR MICROSCOPIC OBSERVATION EQUIPPED WITH THE SAME**

(30) Priority: 29.03.2007 JP 2007087725
(71) Applicant: National University Corporation University Of Toyama, Toyama-shi, Toyama 930-8555 (JP); Richell Corporation, Toyama-shi Toyama 9390592 (JP)
(72) Inventor: FUKUOKA, Junya, Toyama-shi Toyama 930-8555 (JP); YAMASHITA, Kazuyuki, Toyama-shi Toyama 939-0592 (JP)
(74) Representative: UEXKÜLL & STOLBERG
(86) International application number: PCT/JP2008/056059
(87) International publication number: WO 2008/123410

(57) **Abstract**

[PROBLEMS] If is intended to provide a storing device which is convenient in preserving a slice of a pathological tissue or the like over a long time and by which a required number of slices can be quickly provided without waste. It is also intended to provide an instrument for microscopic observation which is equipped with this storing device and a transparent plate having an adhesive layer formed thereon.

[MEANS FOR SOLVING PROBLEMS] A device comprising: a piece of a resin film on which a slice having been excised from a sample block or a cell block slice is adhered and fixed via an adhesive layer provided on the surface thereof; and a holder on the surface of which the back face of the film piece is detachably adhered and fixed via a pressure-sensitive adhesive layer. An instrument for microscopic observation which comprises the storing device and a transparent plate for adhering and fixing the film piece having been peeled off from the storing device.

## Description

### TECHNICAL FIELD

The present invention relates to a device for storing a slice which can preserve a slice having been cut off from a sample block or a cell block slice as a specimen over a long time and by which a required number of slices can be promptly provided without waste as required.
Particularly, the present invention relates to a device for storing a slice which is suitable for immunostaining or in situ analysis, and an instrument for microscopic observation in which the storing device, a slide glass and the like are provided.

### BACKGROUND ART

Formation of slices of tissues of animals and plants and microscopic observations of stained slices are performed for the purpose of disease diagnosis or internal observation of the tissue.
As a sample block prepared at this time, there is a paraffin tissue block formed by embedding a tissue or an organ harvested/excised from animals and plants in paraffin and a paraffin cell block in which cells such as cultured cells or the like are fixed, dehydrated, and subjected to a paraffin treatment (hereinafter, these are collectively called a paraffin block).
Further, a frozen block formed by freezing the tissue, organ or cell as it is is prepared depending on the purpose.
As a sample block, there is a block (hereinafter, referred to as an array block) in which cylindrical tissue cores (hereinafter, referred to as cores) having a diameter of 0.6 to 3 mm are harvested by inserting a hollow needle into a focus part of a tissue or an organ in a donor block such as a paraffin block or a frozen block and these cores are arranged at lattice positions in another box-shaped paraffin block.

Conventionally, the sample block is put in each of the divided regions of a rectangular shallow storage organizer made of wood or stainless steel, which are formed by lattice-like partition plates fitting into the storage organizer, and is stored at normal temperature or low temperature.
Further, when the immunostaining or in situ analysis is performed, that is, when a tissue sliced piece having been cut off from a paraffin block or a frozen block or a sliced core (hereinafter, referred to as a slice) having been cut off from an array block is necessary, the sample block is taken out from the storage organizer and sliced with a sharp knife of a microtome or a cryosection preparing apparatus. Then the slice is floated on water in a cistern and scooped with a slide glass for the case of a paraffin block, or the slice adheres directly to a slide glass for the case of a frozen block.
Herein, if the sample block is an array block, a plurality of sliced cores are embedded or frozen in the slice to be scooped up or the slice to be adhered, and therefore a product (hereinafter, referred to as a tissue array) in which many sliced cores are arranged at lattice positions on a slide glass is formed.

The above-mentioned method requires experience and skill and has a problem of causing a loss of a slice.
Such a problem has been solved by a slicing method using an adhesive tape described below.
The slicing method using an adhesive tape is a method in which an adhesive tape is pressed against a top face of the sample block to adhere the adhesive tape to the sample block, and a sharp knife is horizontally moved at a level which is slightly below the portion to which the tape is adhered and fixed to cut out the slice together with the adhesive tape.
This adhesive tape is subjected to staining, dehydration, and clearing with the cut out slice still bonded to the tape, and then it is turned upside down and brought into close contact with a glass slide on a surface of which a sealing agent layer is formed, and the slice is sealed between the adhesive tape and the glass slide to prepare a slide for a test for the purpose of performing microscopic observation (Patent Document 1).

On the other hand, in order to overcome the inherent defect that the glass slide breaks easily, thin film-like polymer holders exhibiting low water absorption, specifically polyethylene terephthalate or polyethylene naphthalate polymer holders having a thickness of 50 to 300 µm, are known as an alternative to the glass slide .
This holder is used for microscopic observation after adhering a tissue section or cells to a surface thereof and staining the tissue section or cells (Patent Document 2).
Patent Document 1: JP-A 2006-38848
Patent Document 2: JP-A 2001-215181

### DISCLOSURE OF THE INVENTION

### Problems to be Solved by the Invention

The slicing method using an adhesive tape described in Patent Document 1 cannot be promptly used for various investigations or tests since the method is a method in which a slice is cut off from a sample block when the slice is needed, and subjected to staining or the like to prepare a slide for a test.
In addition, since the slice is sealed between the adhesive tape and the glass slide, overall shape and weight of the slide for a test are large, and therefore there is a problem that the number of the slides for a test, which are housed in a storage organizer, is restricted.
Further, since a main component of the slides for a test is glass, there is a problem that the slides for a test are suitable to break and their handling is troublesome.
There is another problem that when the need for peeling off the tape arises, it is difficult to peel off the slice from the adhesive tape.
In addition, the polymer holder described in Patent Document 2 is a holder just used in place of a glass slide.

Furthermore, in the case of the tissue array, many sliced cores are adhered and fixed to one glass slide, but a part of these sliced cores often suffice to perform an actual test/investigation. However, in the above-mentioned slide for a test, since a core not required to be tested is also simultaneously subjected to a treatment such as immunostaining, there was a problem that valuable sliced cores are wasted.

It is an object of the present invention to provide a device for storing a slice, which is lightweight, can be housed in large numbers in a storage organizer or the like, is convenient in handling, is cheap and does not have disposal restrictions, and is convenient in preserving a slice over a long time, and it is another object of the present invention to provide a storing device by which a required number of slices can be promptly provided without waste as required and which is suitable for immunostaining or in situ analysis requiring a prompt test.
Furthermore, it is another object of the present invention to provide an instrument for microscopic observation which is provided with this storing device and a transparent plate having an adhesive layer formed thereon.

### Means for Solving the Problems

(1) A device for storing a specimen slice of the present invention is characterized by including a piece of a resin film to a surface of which a slice having been cut off from a sample block or a cell block slice is adhered and fixed, and a resin holder to which the back face of the film piece is detachably adhered and fixed.
   The sample block in the present invention includes a paraffin tissue block formed by embedding a tissue or an organ harvested/excised from animals and plants in paraffin, a resin block formed by embedding a tissue or an organ in a resin such as an acrylic resin, a frozen block formed by freezing the sample as it is, and in addition to these, a paraffin cell block prepared by a method according to such an embedding treatment of tissues that cells such as cultured cells are fixed, dehydrated, and subjected to a paraffin treatment.
   Further, a slice of a cell block refers to a slice formed by culturing and gelating cells to be a specimen and forming the gelated cells into the shape of sheet or film, and to make it clear it is referred that the object of the present invention is not limited to the frozen block and products subjected to an embedding treatment.

The adhesion referred to here means that a adhesive layer is solidified and serves to join an adherend in joining an adherend such as a slice, and it is different from a state in which a liquid condition is kept even at a stage of exerting a function of joining an adherend like the pressure-sensitive adhesion.
Accordingly, the adhesive and the pressure-sensitive tackifier are different in composition, mechanical properties such as strength, and physical/chemical properties from each other.
Further, while the adhesive layer requires certain treatments to regenerate when being broken once, the pressure-sensitive tackifier layer is characterized in that if a joining part thereof is broken (peeled), the pressure-sensitive tackifier layer can be reused repeatedly as long as the surface thereof is not stained.

As the adhesive layer, a solvent drying-type adhesive layer, a chemical reaction-type adhesive layer and a hot melt-type adhesive layer can be used.
The chemical reaction-type adhesive layer is preferable in consideration of the subsequent solvent treatment.
Examples of the chemical reaction-type adhesive layer include a thermosetting, anaerobic setting, ultraviolet curable, condensation reaction, addition reaction, and radical polymerization-type adhesive layers.
Further, the adhesive should not be affected by various treatments performed prior to the immunostaining or in situ analysis and is desirably not stained with a staining liquid to be used for staining the slice.
Furthermore, desirably, the adhesive is not dissolved in an organic solvent even when it is immersed in the organic solvent to be used for dehydration, clearing, sealing and the like of the slice, and forms a transparent layer having less intumescentia.
Further, an adhesive having high biocompatibility is preferable, and examples of such an adhesive include a fibrin paste,a gelatin paste, polypeptide-based adhesives such as poly-L-lysine, cyanoacrylate-based adhesives, urethane-based adhesives, and synthetic rubbers.

Since the pressure-sensitive tackifier layer bonds a resin film piece to a resin holder, a publicly known pressure-sensitive tackifier can be used.
Examples of the pressure-sensitive tackifier include polymers having a glass transition temperature of room temperature or lower, such as natural rubbers, synthetic rubbers, and acrylic polymers.
When heat resistance is required, silicone rubber-based materials are used for a polyester tape or the like.
The polyester tape is superior in heat/cold resistance, and chemical resistance.

Examples of a resin film used in the present invention include films predominantly composed of one or more polymers selected from polyethylene terephthalate, polyethylene naphthalate, atactic polystyrene, syndiotactic polystyrene, polycarbonate, triacetyl cellulose, polymethyl methacrylate, polysulfone, and polyallylate.
The film predominantly composed of polyethylene terephthalate or polyethylene naphthalate is preferable.
A thickness of the resin film is preferably 25 µm or less and more preferably 10 to 20 µm because a sliced piece is placed on the top surface of the film and the film is bonded to a slide glass.

The surface(s) of one side or both sides of the resin film may be subjected to a hydrophilic treatment.
Herein, the hydrophilic treatment includes treatments which make the surface of the polymer holder hydrophilic through one or more manipulations of a glow treatment, a corona treatment, an ultraviolet light treatment, a flame treatment and a high frequency treatment as well as a method for imparting hydrophilicity by applying a hydrophilic material as required and a method of blowing sand-like substances to bring the film surface into fine projections and depressions.
Further, as the hydrophilic treatment, two or more treatments may be used in combination.
The glow treatment or corona treatment of the polyester-based resin film may be performed according to, for example, the method described in Patent Document 2.

When imparting hydrophilicity by applying a hydrophilic material, it is preferable to apply a polymer or a copolymer obtained by polymerizing one or more monomers selected from vinyl chloride, vinylidene chloride, butadiene, styrene, methacrylic acid, acrylic acid, itaconic acid and maleic anhydride, or a polymer such as polyethylene imine, epoxy resin, grafted gelatin or nitrocellulose.
The hydrophilic thin film may be one layer or multilayer.
A method of applying the material is not particularly limited, and examples of the method include a dip coating method, an air knife coating method, a curtain coating method, a roll coating method, a wire-bar coating method, a gravure coating method, and an extrusion coating method in which a hopper is used.

The holder is formed into the shape of plate or sheet, and it may be transparent or may not be opaque, and injection molded articles composed of polyethylene terephthalate, polyethylene naphthalate, polystyrene, polycarbonate, polymethyl methacrylate, polysulfone, or polyallylate can be used as the holder.
Further, the holder preferably has a dark color tone in order to facilitate visualization of a tissue section.

An object of the slice is, for example, tissues used in a pathological tissue test, cultured cells or the like, and the slice is a sliced section having a thickness of 10 µm or less, preferably 2 to 5 µm, which is sliced from a paraffin block, a resin block, a frozen block or a cell block subjected to an embedding treatment.
In addition, in the case of the cell block, a slice of a cell block which is formed by culturing and gelating cells and is formed into the shape of a sheet or the film may be used in addition to the slice subjected to the embedding treatment described above.
A cell to be cultured may be either of an immortalized cell or a gene-introduced cell.

(2) The holder may include a freely openable cover film which is attached fixedly to the holder at one side and the cover film may be sized so as to cover the film piece adhered and fixed to the surface of the holder.
   Such a cover film can prevent the deterioration of an adhesive force since it can prevent a stain from adhering to the pressure-sensitive tackifier layer.

(3) The holder is preferably provided with a pressure-sensitive tackifier layer on a surface thereof.
   Herein, if the pressure-sensitive tackifier layer is formed on the whole area of the holder, the film piece can be adhered to any location of the holder.

(4) As a means for adhering and fixing the film piece to the surface of the holder, a double-faced adhesive tape may be used.
   By using a planar double-faced tape whose size is equal to or a little smaller than that of the film piece, time and effort of forming a pressure-sensitive tackifier layer on the holder can be omitted.

(5) The holder may be formed in such a size that it can adhere and fix a plurality of film pieces.
   Thereby, a plurality of slices can be arranged on the holder.

(6) The sample block is formed by embedding a plurality of cores having a diameter of 0.5 to 3 mm at lattice positions in a paraffin block, and the slice having been cut off from the sample block may be adhered and fixed to the surface of the film piece.
   If many cores are arranged on the film piece and many film pieces are arranged on the holder, a highly dense tissue array can be formed.

(7) The instrument for microscopic observation includes a device for storing a specimen slice described in any one of the above items (1) to (6), and a transparent plate to a surface of which the film piece having been peeled off from the storing device is adhered and fixed.
   Herein, the transparent plate is typified by a slide glass, and may be a clear and colored or clear and colorless hard resin.
   Since the transparent plate such as a slide glass is provided in addition to the device for storing a slice, the film piece having been taken out from the device for storing a slice can be adhered and fixed to the transparent plate, and thereby various treatments can be performed and a slide for microscopic observation can be promptly prepared.
   The adhesive used herein is an adhesive which adheres a resin film piece to a transparent plate, and a wide variety of adhesives are commercially available.
   Examples of the adhesive include adhesives to be used for the above-mentioned adhesive layer, such as ultraviolet curable acrylic adhesives, and adhesives formed by dissolving Canada balsam in xylene.

The device for storing a slice of the present invention can be produced by bonding the slice of tissues embedded in the paraffin block or the slice of the cultured cells to a resin film piece cut into a certain shape, or by placing the slice of the cell block of the cultured cells formed into the shape of sheet or film on a resin film piece cut into a certain shape, and then placing the film piece on a resin holder onto the surface of which a pressure-sensitive tackifier layer is applied.

### EFFECTS OF THE INVENTION

As described above, in the present invention, since a slice has been cut off from a sample block in advance and the slice having been cut off is adhered to a film piece and the slice is adhered to a holder via the film piece to be stored, it is not necessary to newly cut off the slice and it is possible to promptly provide the slices without waste by peeling off a required number of film pieces from the holder as required.
Further, it is also possible to adhere a slice of the gelated cell block to the holder in advance to store the slice.
Since the film piece and the holder are made of a resin, the storing device is hardly broken and a storage organizer accommodating many storing devices is not heavy, and therefore the storing device is convenient in handling.

According to the invention of claim 5, it is possible to arrange a plurality of film pieces on the holder so as to be easy and convenient to use since the holder is formed in such a size that it can adhere and fix a plurality of film pieces.
Additionally, since the film piece is detachable, a required number of slices of a required site can be promptly provided without waste.

According to the invention of claim 6, it is possible to arrange many cores on one holder and provide a highly dense tissue array having a statistically useful number of specimens (number of samples) since many film pieces, to each of which the slice having a plurality of cores arranged at lattice positions is adhered, are adhered to the holder.

Since the instrument for microscopic observation of the present invention has the device for storing the slice and the slide glass on a surface of which the film piece having been peeled off from the holder is adhered and fixed via an adhesive layer, the slice having been peeled off from the holder can be promptly and smoothly adhered to a slide glass via the film piece and subjected to treatments such as the immunostaining performed prior to a microscopic observation.

The slice or the cell block held by a resin film in the device for storing a slice of the present invention can be used as a control for controlling the precision of a pathological tissue test.
Specifically, a resin film on which the slice or the cell block is held and a tissue section newly sliced are placed on one slide glass, and subsequently, one tissue can be compared with the other using a method of visualizing an objective antigen by a means such as a fluorescent label or a colloidal gold label in an immunostaining method using specific antibodies, and thereby, for example, a protein specifically expressed in cancer can be qualitative or semiquantitatively measured.

### BRIEF DESCRIPTION OF THE DRAWINGS

Fig. 1 is a view showing a device for storing a sliced piece of Embodiment 1 of the present invention.
Fig. 2 is a view of a device for storing a sliced piece showing a modification of Embodiment 1 of the present invention.
Fig. 3 is an illustrative view showing an example of use of the storing device of Embodiment 1 of the present invention.
Fig. 4 is a view showing a device for storing a sliced piece of Embodiment 2 of the present invention.

### DESCRIPTION OF THE REFERENCE NUMERALS AND SYMBOLS

- 1, 1a: film piece
- 2, 2a: tab
- 3, 3a: adhesive layer
- 4, 4a: holder
- 5, 5a: pressure-sensitive tackifier layer
- 6, 6a: cover film
- 7: release paper
- 12: paraffin block
- 13: donor block
- 15: slice
- 21: array block
- 22: core
- 23: paraffin block
- 25: slice
- 26: adhesive layer
- 27: film piece
- 29: holder
- 31: pressure-sensitive tackifier layer
- 32: slide for storing
- 33: data display part

### BEST MODE FOR CARRYING OUT THE INVENTION

Hereinafter, embodiments of the present invention will be described by way of an example of a donor block formed by embedding a cancer tissue harvested from a patient in a paraffin block.

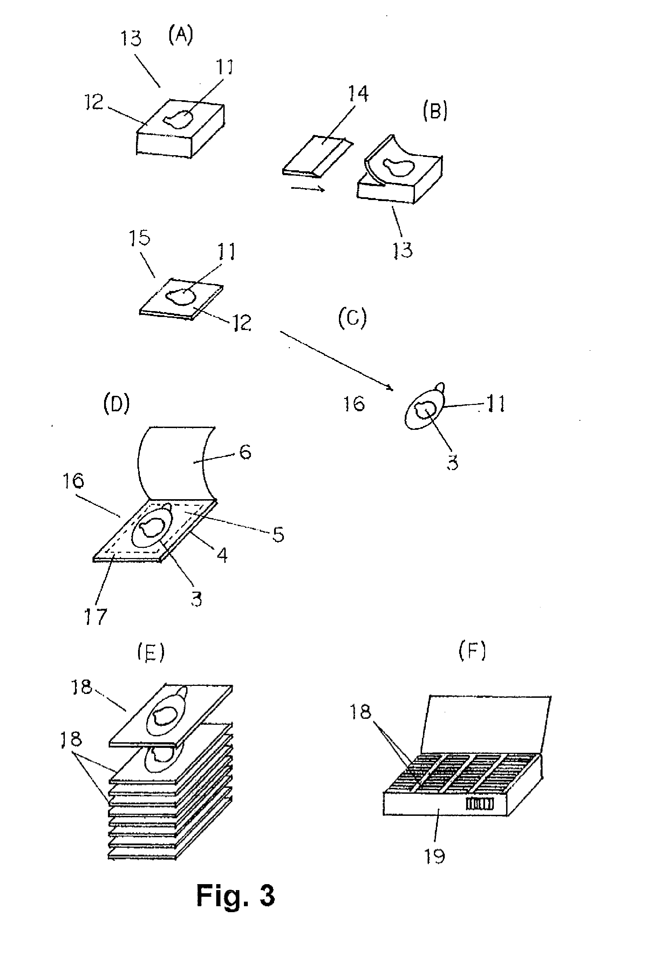

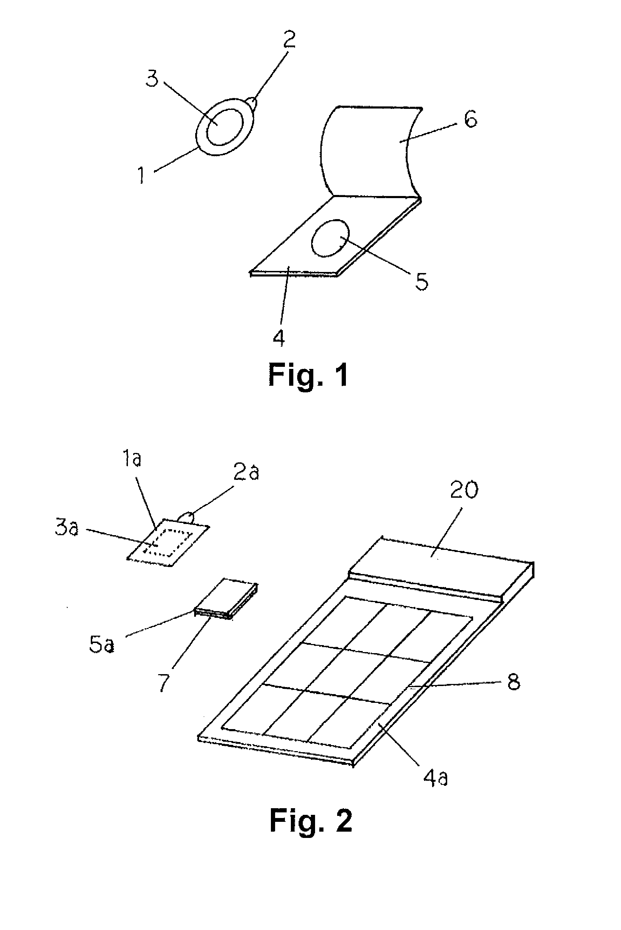

Figs. 1 to 3 show Embodiment 1 of the present invention, and Fig. 1 is a perspective view of a device for storing a sliced piece, Fig. 2 is a modification thereof, and Fig. 3 is an illustrative view of a method for preparing a slide for storing.

In Fig. 1, reference numeral 1 indicates an elliptical polyester film piece having a thickness of 20 µm, a minor axis of 5 mm and a major axis of 10 mm, reference numeral 2 indicates a tab provided on an extension of the major axis of the film piece 1, reference numeral 3 indicates an adhesive layer applied to a surface central portion of the film piece 1, reference numeral 4 indicates a rectangular acrylic resin holder having a thickness of 2.5 mm and a size of 26 mm long and 19 mm wide, reference numeral 5 indicates a circular pressure-sensitive tackifier layer applied in a thickness of 0.1 mm onto the surface of the holder 4, and reference numeral 6 indicates a transparent polyester cover film which is attached fixedly to a back side of the holder 4 at one side.

The film piece 1 used here is formed by biaxially stretching a transparent polyethylene terephthalate film extruded from an extruder and cutting the stretched film into a shape of an ellipse.
As for physical properties of the film piece 1, a tensile strength is 14 to 24.6 kg/mm², a linear expansion coefficient is 6 × 10⁻⁵/°C, a thermal shrinkage is less than 0.5% at 100°C for 30 minutes, a heatproof temperature is 150°C, a wintering temperature is -60°C, a glass transition temperature is 81°C, and the melting point is 264°C.
The adhesive layer 3 is formed from poly-L-lysine (produced by Muto Pure Chemicals Co., Ltd.), and the adhesive with which the film piece is adhered to the sliced piece is not dissolved in an alcohol or xylene, has a small thermal shrinkage and is transparent.
The holder 4 is horizontal and is not warped, and the pressure-sensitive tackifier layer formed on the top surface of the holder is an acrylic polymer of a general-purpose pressure-sensitive type.

Fig. 2 shows a modification of Embodiment 1 of the present invention.
In Fig. 2, reference numeral 1a indicates a square polyester film piece having a thickness of 16 µm and a size of 5 mm × 5 mm, reference numeral 2a indicates a tab provided at a side on a back side of the film piece, reference numeral 3a indicates an ultraviolet curable adhesive layer formed by adding a photopolymerization initiator to an acrylic oligomer, and reference numeral 4a indicates a rectangular acrylic resin holder having a thickness of 2.5 mm and a size of 20 mm long and 25 mm wide.
The pressure-sensitive tackifier layer 5a is made by using a double-faced adhesive tape whose upper and lower faces are respectively bonded with releasing paper. The releasing paper bonded to the upper face is peeled and the double-faced adhesive tape is bonded to the back face of the film piece to prepare the pressure-sensitive adhesive layer 5a.
The releasing paper on the lower face is still bonded to the tape.
Reference numeral 8 indicates a mark line defining the same size as that of the film piece on the top surface of the holder 4a, and no pressure-sensitive tackifier layer is provided on the top surface.
Reference numeral 20 indicates an area for displaying an identification symbol of each slice.

If film pieces, to which slices having been cut off from different donor blocks are adhered, are arranged three column wide and three row deep in a reticular pattern along the mark line 8 on the holder 4a via a pressure-sensitive tackifier layer provided on the backside of the film piece, a tissue array holding the slices of nine different persons on one holder 4a can be formed.
By accumulating many slides for storing having nine slices of the same excised sites of different persons in a storage organizer, excised site-by-excised site database concerning cancer can be constructed.

As for physical properties of the acrylic holder, an elongation modulus is 3.3 GPa, a flexural modulus is 3.3 GPa, a total light transmittance is 93%, and a linear expansion coefficient is 6 × 10⁻⁵(1/°C)

The slice of the cell block embedded in paraffin can be prepared by following, for example, the procedure described below.
1. Cell strains are cultured in a petri dish.
2. When the cells become confluent, a culture medium is disposed of and the cells are washed with phosphate buffer saline once.
3. The cells are scraped with a scraper.
4. The scraped cells are shifted to an Eppendorf tube with a pipet.
5. The culture medium is subjected to centrifugation for 3 minutes at 2500 rpm by a centrifuge.
6. A supernatant liquid is disposed of and formalin is poured to fix the cells at room temperature for 24 hours.
7. Formalin is gently disposed of and 70% ethanol is added, and the tube is shaken for 1 hour.
8. 70% ethanol is disposed of and 100% ethanol is added, and the tube is shaken twice for 1 hour.
9. The medium is changed to 100% ethanol and left standing overnight.
10. Ethanol is disposed of and xylene is added, and the tube is left standing for 30 minutes. At this time, a clump of cells is floated.
11. Xylene is replaced twice and the tube is left standing for 20 minutes.
12. The clump of cells is put in paraffin of about 65°C, which is warmed up in a high-temperature bath in an incubator. Three baths of this are moved every 15 minutes to blend well.
13. The clump of cells is put in an embedding dish and a proper amount of paraffin is poured, and the clump of cells is covered with a cassette and cooled.
   A massive paraffin cell block thus obtained is cut off into slices with a microtome or the like.
   Although details are omitted, the slice of the cell block can also be obtained by forming a cell, which is gelated by replacing moisture of the cultured cell with a mucopolysaccharide such as hyaluronic acid, into the shape of sheet or film.

A method for using the device for storing a slice of Embodiment 1 will be described based on Fig. 3.
When a test is performed to see whether a tissue having been excised from a patient includes cancer cells or not, an excised tissue 11 having a diameter of 2 mm is embedded in a paraffin block 12 to prepare a paraffin donor block 13 (A), and a slice 15, in which thicknesses of a paraffin block 12a and a tissue section 11a are 0.6 mm, is cut off from the surface layer of the donor block using a sharp knife 14 (B).
The slice 15 cut off is bonded to the adhesive layer 3 of the film piece, and the film piece is heated to cure the adhesive layer 5.
A part run over the film piece is shaved off to prepare a film piece 16 for holding to which the slice is adhered (C).

Next, the cover film 6 of the holder 4 is opened, and the back side of the film piece 16 to which the slice is adhered is pressed against the pressure-sensitive tackifier layer 5 formed at a central part to detachably adhere and fix the film piece to the holder 4 (D).
When the cover film 6 is closed and the surface thereof is swept by fingers, the cover film 6 is stuck to the holder 4 due to static electricity.
In addition, if a frame-shaped pressure-sensitive tackifier layer 17 indicated by a broken line is provided on the outer edge of the holder, the slice 15 can be cut off from the external air by closing the cover film 6.
A slide 18 for storing a slice, which can preserve the slides over a long time by closing the cover film 16, can be prepared in this manner (E).
Generally, an identification number, which is linked with data such as a chart number of a patient, a site and a date of harvesting, a serial number and an administrative date, is marked on the slide for storing, and the slide is housed and stored in a storing box 19 (F).

When a slice is required for pathological diagnoses, required slides 18 for storing are taken out from the storage organizer 19, and the film piece 16, to which the slice 15 is adhered, is peeled off from the holder 4, and the back face of the film piece is adhered to a glass slide via an adhesive layer, and external energy such as heat is applied to cure the adhesive layer.

When the glass slide is used to prepare a slide for a test, a deparaffin treatment is performed by immersing the entire glass slide in xylene in a state in which the film piece 1 having the slice adhered is still adhered and fixed to the glass slide.
Thereafter, the slide glass is immersed in water to remove xylene and then subjected to immunostaining.
An ultraviolet curable adhesive GL-1002 (produced by Gluelabo Ltd., containing an acrylic resin as a main component, having a curing shrinkage rate of 7.3 and an adhesion strength greater than 250 N/cm²) is applied onto the glass slide and the film piece is adhered to the glass slide. Then a cover glass (22 mm × 22 mm) is placed and the adhesive is cured. Here, the cover glass is prevented from being lifted. In this way, a glass slide for a test is prepared.
The slide for a test thus prepared is observed with an optical microscope according to the same manipulation as in an ordinary glass slide.

The slide for a test thus prepared is subjected to immunostaining and then used for microscopic observation in determining whether the tissue is benign or malign based on the presence or absence of a stained area.
If there is a stained area, the tissue is determined malign, and medical treatments such as chemotherapy and surgery are performed.
In addition, a standard sample (referred to as a control) prepared by the same method may be located together with the slide for a test.

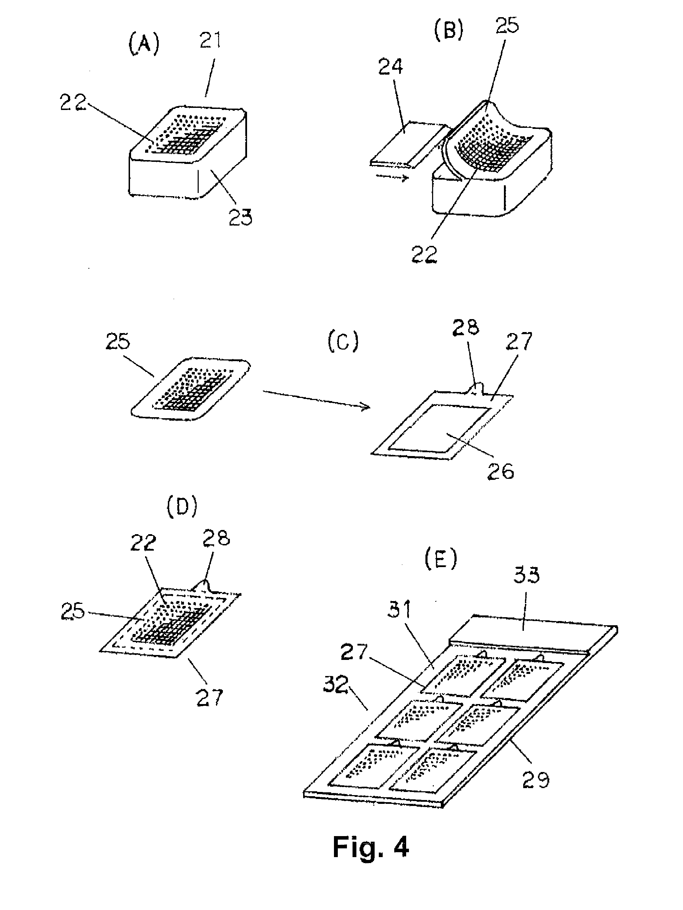

Fig. 4 shows Embodiment 2 of the present invention and an example of use thereof.
Reference numeral 21 indicates an array block made of paraffin, and the array block 21 is formed by embedding a cancer of liver excised by surgery in paraffin, inserting a hollow needle having an inner diameter of 2 mm into the cancer to harvest a cylindrical core 22 having a diameter of 2 mm introduced into the hollow part, and embedding the core at lattice positions in another box-shaped paraffin block 23 (A).
A slice 25 is cut off from the array block 21 with a knife 14 (B), the slice 25 cut off is adhered to a film piece (C), and an adhesive layer is cured to prepare a film piece 27 to which the slice 25 is adhered and fixed (D).
Reference numeral 28 indicates a tab provided in a protruding manner at a side on a back side of the film piece and reference numeral 29 indicates an acrylic resin holder.
The slice 25 is adhered and fixed to a pressure-sensitive tackifier layer 31 of the holder 29 to prepare a slide 32 for storing (E).

The holder 29 of Embodiment 2 has a data display part 33, which is a little higher than the holder 29, on a back side and has the pressure-sensitive tackifier layer 31 throughout an upper surface, which is lower than the display part 33, on a front side.
The film pieces 27, to each of which the slice is adhered, can be adhered and fixed to the holder 29 in an orderly manner via a pressure-sensitive tackifier layer provided on the backside thereof to prepare a highly dense tissue array.
A cover film is attached to the holder as required to finish a slide for storing.
The highly dense tissue array is suitable for tests and investigations, since in the highly dense tissue array, the number of specimens (number of cores) is large and this is considered to be statistically useful.
Moreover, since a slide for a test can be prepared by peeling off a cover film, peeling off a film piece on which an intended slice is adhered, and quickly adhering the film piece to a slide glass, the slide for a test, to which a required number of slices are adhered, can be simply and promptly be prepared as required, and the present invention is extremely useful.

### INDUSTRIAL APPLICABILITY

The device for storing a slice and the instrument for microscopic observation provided with the storing device of the present invention are useful as a control in controlling the precision of immunostaining in a pathological tissue test and a cytoscopy.
Further, the device for storing a slice and the instrument for microscopic observation provided with the storing device of the present invention are useful for preparing a simple and prompt highly dense tissue array.

## Claims

1. A device for storing a specimen slice comprising a piece of a resin film to which a slice having been cut off from a sample block or a cell block slice is adhered and fixed, and a resin holder to which the back face of the film piece is detachably adhered and fixed.

2. The device for storing a specimen slice according to claim 1, wherein the holder includes a freely openable cover film which is attached fixedly to the holder at one side and the cover film is sized so as to cover the film piece adhered and fixed to a surface of the holder.

3. The device for storing a specimen slice according to claim 1 or 2, wherein the holder is provided with a pressure-sensitive tackifier layer on a surface thereof.

4. The device for storing a specimen slice according to claim 1 or 2, wherein a means for adhering and fixing the film piece to the surface of the holder is a double-faced adhesive tape.

5. The device for storing a specimen slice according to any one of claims 1 to 4, wherein the holder is capable of adhering and fixing a plurality of film pieces.

6. The device for storing a specimen slice according to any one of claims 1 to 5, wherein the sample block is formed by embedding a plurality of cores having a diameter of 0.5 to 3 mm at lattice positions in a paraffin block, and the slice having been cut off from the sample block is adhered and fixed to a surface of the film piece.

7. An instrument for microscopic observation comprising the device for storing a specimen slice according to any one of claims 1 to 6, and a transparent plate to a surface of which the film piece having been peeled off from the storing device is adhered and fixed.
